# EUROPEAN PATENT SPECIFICATION

(11) **EP 2 567 870 B1**
(45) Date of publication and mention of the grant of the patent: **25.03.2015**
(21) Application number: 11180743.4
(22) Date of filing: 09.09.2011
(51) Int. Cl.: B60R 21/207

(54) **Vehicle seat with an airbag unit**
Fahrzeugsitz mit einer Airbageinheit
Siège de véhicule avec unité de sac de sécurité gonflable

(43) Date of publication of application: 13.03.2013
(73) Proprietor: Autoliv Development AB, 447 83 Vårgårda (SE)
(72) Inventor: Garret, Gilles, F-76000 Rouen (FR); Björkqvist, Jonas, S-427 40 Billdal (SE)
(74) Representative: Parry, Simon James

(56) References cited:
- DE-A1-102007 000 291
- GB-A- 2 397 047
- JP-A- 2007 261 500

## Description

The present invention relates to a vehicle seat, and more particularly relates to a vehicle seat provided with an airbag unit.

It is known to provide motor vehicle seats with one or more airbags configured so that the airbags may be inflated in a side impact crash situation involving the motor vehicle, in order to provide lateral protection to an occupant of the seat. A typical arrangement of this general type comprises an airbag unit in the form of a module mounted to the backrest of the seat, the module being arranged so that the airbag is inflated in a forwards direction relative to the backrest, such that the airbag is deployed to the side of the seat occupant, between the occupant and the side panel or adjacent door of the vehicle.

In conventional side airbag arrangements of the general type proposed above, the side airbag module of the seat is typically mounted on the outside of the backrest frame, inside the upholstery of the seat. However, with such arrangements there can often be a significant distance separating an occupant of the seat and the airbag during early stages of the deployment of the airbag. It has been found that such a situation can allow the occupant's torso, which moves relative to the seat in the event of side impact crash by virtue of its inertia, not to bear properly against the inflating airbag sufficiently soon to prevent injury to the occupant. In order to address this issue, it has therefore been proposed to mount the airbag module on the inside surface of the backrest frame, in order to ensure that the inflating airbag is located closer to the occupant's torso.

However, mounting side airbag modules to the inside of a seat's backrest frame in this manner raises its own problems. One significant problem is that there is often very little space available inside the backrest frame in order to accommodate a side airbag module. This can make it impossible to mount a side airbag module in this manner for some seats, such as compact "sports seats" as are now becoming increasing popular. Furthermore, even in a seat arrangement which does have sufficient space to accommodate an inboard-mounted side airbag module in this manner, the resulting seat arrangement can sometimes be rather less comfortable for the seat occupant than a more conventional outboard-mounted arrangement, due to the proximity of the airbag module to the occupant and the resulting reduction in space for cushioning upholstery in the side bolster of the seat.

It is an object of the present invention to provide an improved vehicle seat, and in particular an improved vehicle seat having a side airbag module.

According to the present invention, there is provided a vehicle seat comprising: a squab and a backrest, the backrest having a frame covered with upholstery; and an airbag unit comprising an inflatable airbag having an inlet connected to an inflator to inflate the airbag; the airbag unit being mounted to the backrest frame with the inflator positioned to direct inflating gas into the airbag in a generally forward direction relative to the backrest, the seat being characterised in that the inflator is mounted to the frame at a position inboard of part of the frame; the airbag is rolled and/or folded into an airbag package positioned on an opposing outboard side of said part of the frame; and the airbag package is fluidly connected to the inlet of the airbag by a connecting region of the airbag which extends around a front region of the backrest frame; the airbag thus being arranged for inflation upon actuation of the inflator via inwards and forwards movement of the airbag relative to the backrest frame into a deployed position in which the airbag extends generally forwardly from the inflator.

Preferably, the airbag is arranged for inflation via inwards movement of said connecting region, away from said front region of the backrest frame.

Advantageously, the airbag is unconnected to the outboard side of said part of the frame.

Conveniently, the airbag is connected to the inboard side of said part of the frame.

Preferably, the airbag is connected to the frame only in the region of its inlet.

Advantageously, the airbag is connected to the frame in the region of said inflator.

Conveniently, said inflator comprises at least one mounting stud received through a respective mounting aperture formed in the airbag in the region of said inlet and which is connected to said part of the frame.

Preferably, the airbag is provided inside or behind a flexible cover, the cover being arranged to rupture or otherwise open to permit deployment of the airbag upon actuation of the inflator.

Advantageously, the cover extends from the inflator, around the front region of the frame so as to cover the connecting region of the airbag, and is connected to the outboard side of said part of the frame so as to cover the rolled and/or folded airbag package.

Conveniently, the or each said mounting stud of the inflator extends through said part of the frame from the inboard side to the outboard side and is received in a respective fixing aperture formed in the cover on the outboard side of the frame.

Preferably, said front region of the backrest frame has an arcuate or otherwise generally smooth profile around which said connecting region of the airbag extends.

Advantageously, said front region of the frame is formed of a plastics material around which said connecting region of the airbag extends.

Conveniently, said upholstery comprises springs, the inflator being mounted to the frame at a position in front of the springs. Alternatively, the inflator may mounted to the frame at a position behind the springs.

Preferably, said airbag comprises a plurality of inflatable chambers arranged in fluid communication.

Advantageously, said airbag incorporates in internal baffle dividing the airbag into a first chamber proximal to the inflator, and a second chamber distal to the inflator, the baffle being configured to permit a restrained flow of inflating gas from the first chamber to the second chamber.

Conveniently, the airbag is a thorax and/or a pelvis bag designed to provide side protection to the thorax and/or pelvis respectively of an occupant of the seat.

So that the invention may be more readily understood, and so that further features thereof may be appreciated, embodiments of the invention will now be described by way of example with reference to the accompanying drawings in which:
Figure 1 is a schematic side view of a vehicle seat in accordance with a first embodiment of the present invention;
Figure 2 is a sectional view taken along line A-A in figure 1, illustrating one side part of the backrest of the seat;
Figure 3 is a view corresponding generally to that of figure 2, but illustrating the arrangement at a stage during deployment of an airbag unit provided in the seat;
Figure 4 is a similar view to that of figure 2, but which illustrates a seat in accordance with another embodiment of the present invention, incorporating an alternative configuration of airbag module.
Figure 5 is a schematic side view of a possible airbag suitable for use in the present invention;
Figure 6 is a schematic side view of an alternative airbag suitable for use in the present invention; and
Figure 7 is a schematic side view of another alternative airbag suitable for use in the present invention, the airbag representing a modification of the one shown in figure 6.

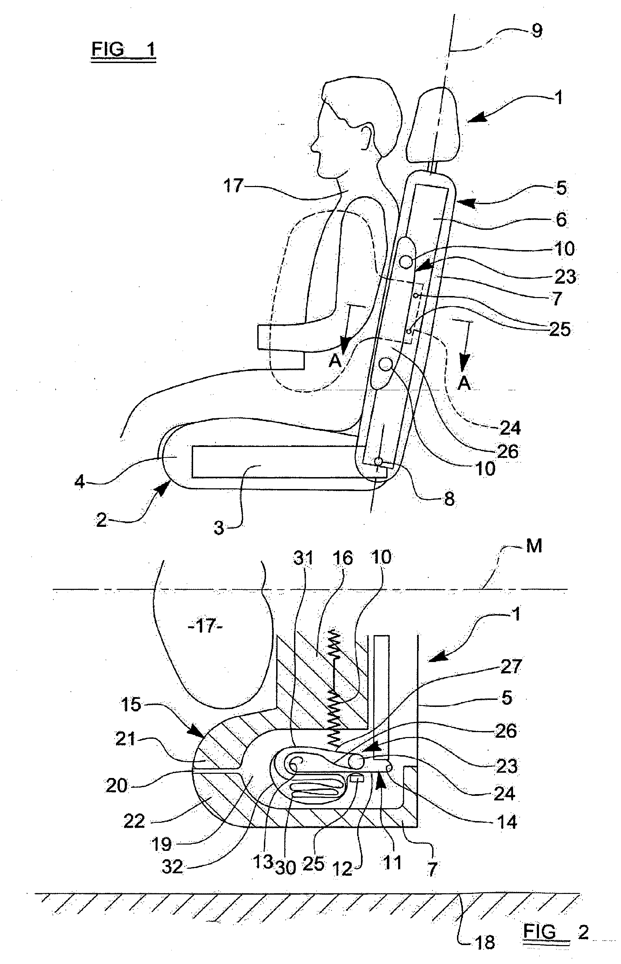

Referring initially to figures 1 and 2 of the accompanying drawings, a vehicle seat 1 in accordance with the present invention is illustrated. The seat has a squab 2 comprising a squab frame 3 which is covered by squab upholstery 4. Extending upwardly and slightly rearwardly from the rear part of the squab 2 is a backrest 5 which comprises a backrest frame 6 covered with backrest upholstery 7. The lowermost part of the backrest frame 6 is pivotally connected at 8 to the rear part of the squab frame 3 such that the angle of inclination of the backrest relative to the squab 2 can be adjusted in a manner known *per se.* The backrest 5 has a major axis 9 which extends away from the squab as shown in figure 1.

The upholstery 4, 7 of the squab 2 and the backrest 5 typically comprises foam material covered with an outer covering of fabric, plastic or leather. The upholstery will also typically comprise a number of internal springs in a conventional manner, such as spring 10 illustrated schematically in figure 2.

As illustrated most clearly in figure 2, the frame 6 of the backrest 5 comprises a pair of spaced-apart structural metal beams 11 (only one such beam 11 being illustrated in figure 2), each of which extends along a respective side region of the backrest 5 so as to lie substantially parallel to the major axis 9 of the backrest. Each beam 11 comprises a generally planar side plate 12 having inwardly rolled front and rear edge regions 13, 14. As will thus be appreciated, the front edge 13 of the beam 11 thus defines a smooth arcuate profile. The rear edge 14 of the beam defines a similar profile, although this is not considered so important to operation of the airbag arrangement of the invention. It should be noted that other configuration of side beams 11 could be used instead of the particular form of beam shown in figure 2. However, it is considered preferable for the side beam 11 to have a front edge region with an arcuate or otherwise smooth profile of a type similar to that illustrated in figure 2, for reasons which will be explained in more detail below.

As illustrated most clearly in figure 2, the upholstery of the backrest is wrapped around the frame 6 so as to define a bolster 15 at each side of the backrest (only one such bolster 15 being illustrated in figure 2). Each bolster 15 extends forwardly of the central region 16 of the backrest so as to be located adjacent the side of an occupant 17 sitting in the seat, thus providing lateral support. The bolster 15 illustrated in figure 2 is the outboard bolster 15 of the seat and hence extends part-way between the seat occupant 17 and the adjacent side of the motor vehicle 18.

In the region of the outboard bolster 15 illustrated in figure 2, there is provided a cavity 19 in the upholstery 7 of the backrest, within which the beam 11 is received. In the forwardmost region of the cavity 19, along the front of the bolster 15, there is provided a pre-defined break-line 20 in the upholstery, along which the immediately adjacent regions of the upholstery 21, 22 are releasably secured to one another in a manner known *per se*, for example, using fabric hook-and-loop type fasteners such as that sold under the well known Trade Mark VELRO.

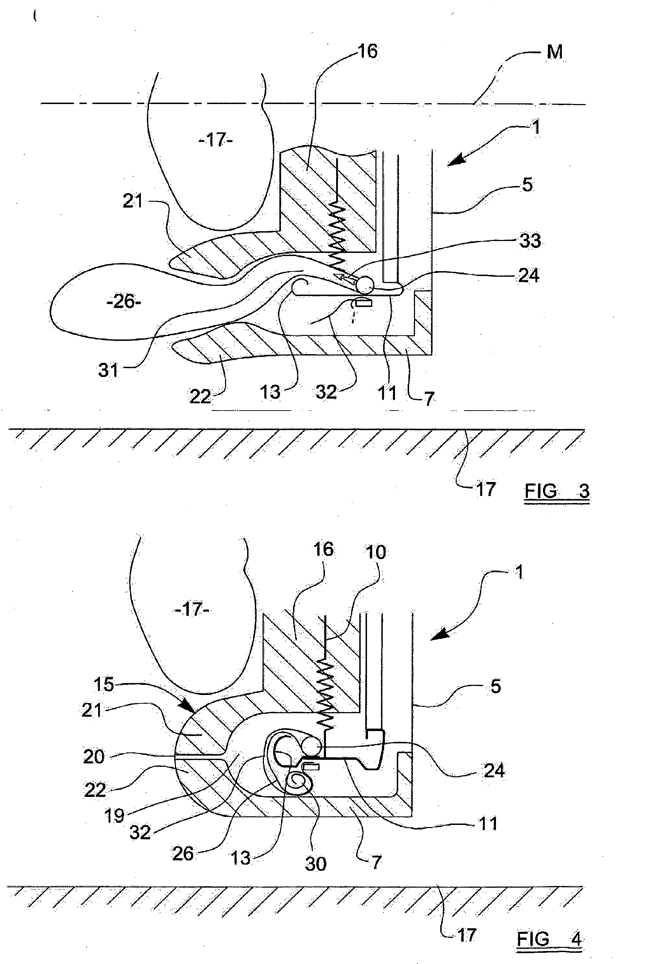

An airbag module or unit 23 is provided within the upholstery 7 of the backrest 5, and is mounted to the beam 11 within the cavity 19. As illustrated in figure 1, the airbag unit 23 is generally elongate and is orientated such that it is substantially parallel to the major axis 9 of the backrest 5 extending away from the squab 2. The airbag unit 23 includes an inflator 24 such as, for example, a gas generator. The inflator 24 is of cylindrical and elongate form and is located generally centrally along the length of the airbag unit 23. The inflator is securely mounted to the inboard side of the side plate 12 of the backrest frame 6 via a pair of spaced apart mounting studs 25 which are received through respective cooperating mounting apertures formed in the side plate 12. As will be seen from figure 3, the inflator 24 is secured to the rear half of the beam 11, in a position spaced rearwardly of the internal upholstery springs 10 extending across the central region 16 of the backrest. As illustrated in figure 1, the inflator 24 is positioned vertically along the backrest frame 6 so as to be located between adjacent upholstery springs 10.

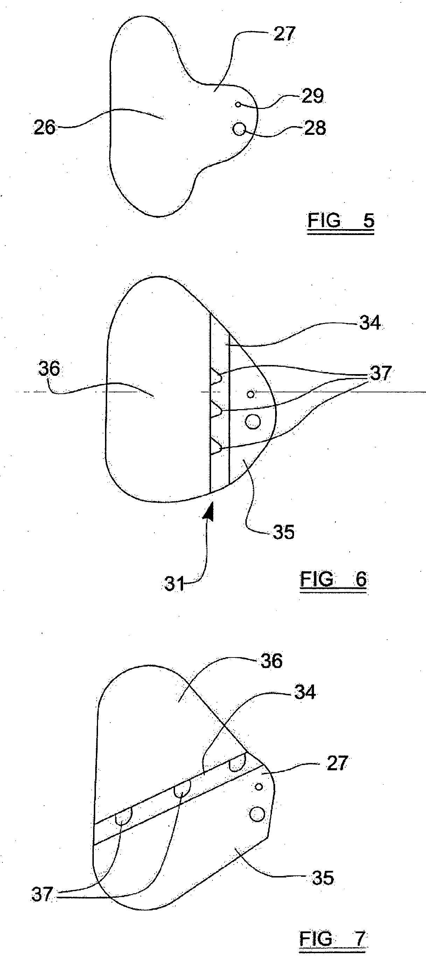

The airbag unit 23 also comprises an inflatable airbag 26 which is preferably made from fabric material and which is connected to the inflator 24 such that the inflator will direct a volume of inflating gas into the interior volume of the airbag 26. An exemplary airbag 26 is shown in figure 5, and it will be seen that the airbag has a relatively narrow neck portion which defines an inlet for the inflating gas, and which is connected to the inflator 24. More particularly, inlet region 27 of the airbag may be provided with an aperture 28 through which the inflator 24 may be inserted into the inlet of the airbag prior to connection to the beam 11, and a mounting aperture 29 arranged to receive a mounting stud 25 of the inflator for mutual connection of the inflator and the airbag to the inboard side of the beam 11 of the backrest frame 6. This connection of the airbag 26 to the inboard side of the beam 11 is shown most clearly in figure 2, where it can be seen that the fabric of the airbag 26 becomes trapped between the inflator 24 and the side surface of the beam 11 when the inflator is mounted in position.

As illustrated in figure 2, the airbag 26 is initially provided in a packaged condition, in which it is folded, for example via a series of zig-zag folds as illustrated, into a package 30, which importantly is located on the outboard side of the beam 11, generally adjacent the outer side face of the side plate 12. In further detail, it will be noted that the folded package 30 is fluidly connected to the inlet region 27 of the airbag via a connecting region 31 of the airbag which extends forwardly from the inlet region 27 and the inflator 24, and which extends around the smooth arcuate front edge region 13 of the beam 11. It will thus be noted that the folded airbag package 30, which represents the bulk of the airbag, is located on the outboard side of the beam 11, whereas the inflator 24 is located on the inboard side. The smooth arcuate profile of the front edge region 13 of the side beam ensures that the fabric of the airbag does not snag or catch on the backrest frame which could damage the integrity of the airbag.

It is to be noted that the only direct connection between the airbag 24 and the side beam 11 of the backrest frame 6 is the above-described connection formed in the region of the airbag inlet 27 via connection of the inflator 24 to the inside of the beam 11. The airbag 24 is not actually connected to the beam 11 at any other position, and most importantly is unconnected to the outboard side of the beam 11.

A protective cover or wrapper 32 is provided over and around the airbag 26, as illustrated most clearly in figure 2. In the embodiment illustrated, the cover 32 takes the form of a flexible fabric or plastic sheet which is fixedly connected to the beam 11 along with the airbag 26 itself via the inflator mounting studs 25. The cover extends from the inflator, around the front region of the beam 11 so as to cover the connecting region 31 of the airbag, and then extends over the folded package 30 on the outboard side of the beam 11. The cover 32 is connected to the outboard side of the beam 11 via a pair of fixing apertures which are each placed over the outwardly protruding mounting studs 25 of the inflator 24 before the fixing nuts are connected thereto.

Turning now to consider figure 3, actuation of the airbag unit 23 described above will now be explained. Upon actuation of the airbag unit 23, for example when an ignition signal indicative of an imminent or extant crash situation is received from a crash sensor, the inflator 24 is actuated, which serves to direct a large volume of inflating gas into the airbag 26 in a generally forward direction relative to the backrest 5, as indicated schematically by arrow 33 in figure 3. This causes the airbag 26, and in particular the folded package 30 to inflate and unfold, from the outboard side of the beam 11 in a generally forwards direction relative to the backrest 5 of the seat.

As it inflates and thus increases in physical size, the airbag 26 ruptures the cover 32 (for example along a predetermined tear-seam provided in the cover for this purpose) so as to burst out of the cover 32. Then, the inflating airbag also bursts through the break line 20 formed in the front region of the bolster upholstery so as to urge the regions 21, 22 of the upholstery immediately adjacent the break line apart as shown in figure 3.

Figure 3 illustrates the airbag 26 during an early stage of inflation following rupture of the cover 32 and bursting of the bolster upholstery. It will be seen from this drawing that as the airbag 26 inflates it moves inwards and forwards relative to the backrest frame, unwrapping itself from around the front edge region 13 of the frame 6. More particularly, it will be noted that the connecting region 31 of the airbag which fluidly connects the its inlet 27 to the main packaged part 30 moves inwardly away from the arcuate curved region of the backrest frame.

Ultimately, when substantially fully inflated the airbag adopts a deployed position as shown schematically in phantom in figure 1, in which it extends generally forwardly from the inflator 24 so as to provide side protection to the torso of the seat occupant 17. However, it is to be appreciated that in other embodiments the airbag 26 can have a slightly different configuration so as to provide protection to the occupant's pelvic region instead of or in addition to his or her torso.

Figure 4, which is generally similar to figure 2 in many respects, illustrates an alternative embodiment of the above-described arrangement. In this arrangement, it will be noted that the side beam 11 of the backrest frame has a slightly different configuration than the beam 11 of the previously described embodiment. Nevertheless, the beam still comprises a generally planar side plate 12 part and an inwardly rolled front edge 13 having a smoothly curved profile.

The inflator 24 of the arrangement illustrated in figure 4 is mounted to the inboard side of the beam 11 in a more forward position. Indeed, in the arrangement illustrated the inflator is actually mounted in front of the upholstery springs 10 rather than behind them as in the arrangement of figures 1 to 3. Also, it will be noted that in this arrangement the airbag 26 is rolled rather than folded into its outboard package 30. More particularly, it will be noted that the airbag is rolled about an axis (directed into the page in figure 4) which lies substantially parallel to the major axis 9 of the backrest, and in a rearwardly and inwardly manner (i.e. counter-clockwise direction in the illustrated example of an outboard airbag unit provided on the left hand seat of a motor vehicle). In all other respects the arrangement of figure 4 is substantially identical to that described in detail above and as shown in figures 1 to 3.

Upon actuation of the inflator 24 in the figure 4 arrangement, the airbag 30 will inflate in a generally similar manner, although in this arrangement the rolled package 30 will unfurl rather than unfold as it moves forwardly and inwardly relative to the seat structure.

The above-described embodiments of the invention both provide seat arrangements having side airbag units in which the inflator is located on an inboard side of a side part of the backrest frame, and the bulk of the rolled or folded airbag is provided in the form of a package located on the outboard side the said side part of the backrest frame. This configuration reduces the space required inboard of the side part of the frame when compared to prior art inboard-mounted arrangements because the airbag package is located outside the frame where there is generally more space. However, the arrangements still provide a side airbag which inflates in a forwards and inwardly directed manner for early coupling to an occupant of the seat which is considered an important factor in protecting the occupant from side impact injuries.

Whilst the invention has been described above with reference to specific embodiments, it is to be appreciated that various modifications or alterations could be made without departing from the scope of the present invention. For example, although the side beam 11 of the backrest frame is preferably formed from metal with a rolled front edge region 13, it may be more appropriate for some arrangements to provide a plastic insert or guide arranged to connection to the front region of the beam 11 in order to define a smooth, and preferably arcuate profile which is resistant to being caught or snagged by the airbag wrapped therearound.

Figures 6 and 7 illustrate two possible alternative configurations for the airbag 26 itself. In figure 6, the airbag 26 is provided with an internal baffle 34 which is preferably formed as a strip of fabric and which extends vertically (in the orientation of the airbag illustrated) and which is connected between the opposing side panels of the airbag. The baffle 34 thus divides the interior volume of the airbag into two inflatable chambers, namely: a proximal chamber 35 located adjacent the inlet region 27 and in direct fluid communication with the inlet of the airbag; and a distal chamber 36 spaced from the inlet region 27 by the proximal chamber 35. The baffle 34 has a plurality of flow ports 37 providing fluid communication between the two chambers. As will be noted, however, the total area of the flow ports 37 is relatively small in comparison to the overall area of the baffle.

The baffle 34 thus serves to permit only a restrained flow of inflating gas to flow from the proximal chamber 35 , through the flow ports 37 and into the distal chamber 36. Upon actuation of the inflator 24, the internal gas pressure inside the proximal chamber 35 thus rises significantly faster than the internal gas pressure inside the distal chamber 36. This inflation characteristic is desirable because it helps to ensure that the inflating airbag bursts quickly through the upholstery of the side bolster 15, whereupon the outer, initially folded/rolled region of the airbag 30 can unfurl/unfold without becoming fouled by the upholstery.

As will be noted, in the arrangement of figure 6, the baffle 34 is positioned in the connecting region 31 of the airbag.

The airbag shown in figure 7 has a similar baffle arrangement. However, in this arrangement the baffle runs diagonally across the airbag so as to divide it into a lower proximal chamber and an upper distal chamber 36. This alternative baffle orientation will have the effect of concentrating the initial inflation effect of the inflating gas towards the inner and lower region of the airbag, ensuring that airbag first bursts through a lower region of the bolster upholstery of the seat, which of course is spaced furthest from the occupant's torso.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A vehicle seat (1) comprising: a squab (2) and a backrest (5), the backrest having a frame (6) covered with upholstery (7); and an airbag unit (23) comprising an inflatable airbag (26) having an inlet (27) connected to an inflator (24) to inflate the airbag; the airbag unit (23) being mounted to the backrest frame (6) with the inflator (24) positioned to direct inflating gas into the airbag (26) in a generally forward direction (33) relative to the backrest (5), the seat being **characterised in** that the inflator (24) is mounted to the frame (6) at a position inboard of part (11) of the frame; the airbag (26) is rolled and/or folded into an airbag package (30) positioned on an opposing outboard side of said part (11) of the frame and generally adjacent an outer side face (12) of said part (11); and the airbag package (30) is fluidly connected to the inlet (27) of the airbag by a connecting region (31) of the airbag which extends around a front region (13) of said part of the frame (11); the airbag (26) thus being arranged for inflation upon actuation of the inflator (24) via inwards and forwards movement of the airbag (24) relative to the backrest frame (6) into a deployed position in which the airbag (26) extends generally forwardly from the inflator (24).

2. A vehicle seat according to claim 1, wherein the airbag (26) is arranged for inflation via inwards movement of said connecting region (30), away from said front region (13) of the backrest frame (6).

3. A vehicle seat according to claim 1 or claim 2, wherein the airbag (26) is unconnected to the outboard side of said part (11) of the frame.

4. A vehicle seat according to any preceding claim, wherein the airbag (26) is connected to the inboard side of said part (11) of the frame.

5. A vehicle seat according to claim 4, wherein the airbag (26) is connected to the frame (6) only in the region of its inlet (27).

6. A vehicle seat according to claim 4 or claim 5, wherein the airbag (26) is connected to the frame (26) in the region of said inflator (24).

7. A vehicle seat according to claim 6, wherein said inflator (24) comprises at least one mounting stud (25) received through a respective mounting aperture (29) formed in the airbag (26) in the region of said inlet (27) and which is connected to said part (11) of the frame.

8. A vehicle seat according to any preceding claim, wherein the airbag (26) is provided inside or behind a flexible cover (32), the cover being arranged to rupture or otherwise open to permit deployment of the airbag (26) upon actuation of the inflator (24).

9. A vehicle seat according to claim 8, wherein the cover (32) extends from the inflator (24), around the front region (13) of the frame so as to cover the connecting region (31) of the airbag, and is connected to the outboard side of said part (11) of the frame so as to cover the rolled and/or folded airbag package (30).

10. A vehicle seat according to claim 9 as dependent upon claim 7, wherein the or each said mounting stud (25) of the inflator extends through said part (11) of the frame from the inboard side to the outboard side and is received in a respective fixing aperture formed in the cover (32) on the outboard side of the frame.

11. A vehicle seat according to any preceding claim, wherein said front region (13) of the backrest frame has an arcuate or otherwise generally smooth profile around which said connecting region (31) of the airbag (26) extends.

12. A vehicle seat according to any preceding claim, wherein said front region (13) of the frame (6) is formed of a plastics material around which said connecting region (31) of the airbag (26) extends.

13. A vehicle seat according to any preceding claim, wherein said airbag (26) comprises a plurality of inflatable chambers (35, 36) arranged in fluid communication.

14. A vehicle seat according to claim 13, wherein said airbag (26) incorporates in internal baffle (34) dividing the airbag into a first chamber (35) proximal to the inflator (24), and a second chamber (36) distal to the inflator (24), the baffle (34) being configured to permit a restrained flow of inflating gas from the first chamber (35) to the second chamber (36).

15. A vehicle seat according to any preceding claim, wherein the airbag (26) is a thorax and/or a pelvis bag designed to provide side protection to the thorax and/or pelvis respectively of an occupant (17) of the seat (1).

## Patentansprüche

1. Fahrzeugsitz (1), umfassend: ein Polsterkissen (2) und eine Rückenlehne (5), wobei die Rückenlehne einen Rahmen (6) aufweist, welcher mit einer Polsterung (7) abgedeckt ist; und eine Airbag-Einheit (23), welche einen aufblasbaren Airbag (26) umfasst, der einen Einlass (27) aufweist, der mit einer Aufblaseinrichtung (24) verbunden ist, um den Airbag aufzublasen; wobei die Airbag-Einheit (23) an dem Rückenlehnenrahmen (6) angebracht ist, wobei die Aufblaseinheit (24) positioniert ist, in einer im Wesentlichen vorwärts orientierten Richtung (33) relativ zu der Rückenlehne (5) Aufblasgas in den Airbag (26) zu richten, wobei der Sitz **dadurch gekennzeichnet** ist, dass die Aufblaseinrichtung (24) an dem Rahmen (6) an einer Position einwärts eines Teils (11) des Rahmens angebracht ist; dass der Airbag (26) in eine Airbag-Packung (30) gerollt und/oder gefaltet ist, welche an einer gegenüberliegenden Außenseite des Teils (11) des Rahmens und im Wesentlichen neben einer äußeren Seitenfläche (12) des Teils (11) positioniert ist; und dadurch, dass die Airbag-Packung (30) mit dem Einlass (27) des Airbags strömungsmäßig durch einen Verbindungsbereich (31) des Airbags verbunden ist, welcher sich um einen vorderen Bereich (13) des Teils des Rahmens (11) erstreckt; wobei der Airbag (26) somit nach einer Betätigung der Aufblaseinrichtung (24) über eine Einwärts- und Vorwärtsbewegung des Airbags (24) relativ zu dem Rückenlehnenrahmen (6) in eine entfaltete Position, in welcher sich der Airbag (26) im Wesentlichen nach vorne von der Aufblaseinrichtung (24) erstreckt, zum Aufblasen eingerichtet ist.

2. Fahrzeugsitz nach Anspruch 1, wobei der Airbag (26) zum Aufblasen über eine Einwärtsbewegung des Verbindungsbereichs (30) weg von dem vorderen Bereich (13) des Rückenlehnenrahmens (6) angeordnet ist.

3. Fahrzeugsitz nach Anspruch 1 oder Anspruch 2, wobei der Airbag (26) mit der Außenseite des Teils (11) des Rahmens nicht verbunden ist.

4. Fahrzeugsitz nach einem der vorhergehenden Ansprüche, wobei der Airbag (26) mit der Innenseite des Teils (11) des Rahmens verbunden ist.

5. Fahrzeugsitz nach Anspruch 4, wobei der Airbag (26) nur in dem Bereich seines Einlasses (27) mit dem Rahmen (6) verbunden ist.

6. Fahrzeugsitz nach Anspruch 4 oder Anspruch 5, wobei der Airbag (26) in dem Bereich der Aufblaseinrichtung (24) mit dem Rahmen (6) verbunden ist.

7. Fahrzeugsitz nach Anspruch 6, wobei die Aufblaseinrichtung (24) zumindest einen Befestigungsstift (25) umfasst, der durch eine entsprechende Befestigungsöffnung (29) aufgenommen wird, die in dem Bereich des Einlasses (27)in dem Airbag (26) gebildet ist, und der mit dem Teil (11) des Rahmens verbunden ist.

8. Fahrzeugsitz nach einem der vorhergehenden Ansprüche, wobei der Airbag (26) innerhalb oder hinter einer flexiblen Abdeckung (32) bereitgestellt ist, wobei die Abdeckung dafür eingerichtet ist, aufzureißen oder sich anderweitig zu öffnen, um eine Entfaltung des Airbags (26) nach einer Betätigung der Aufblaseinrichtung (24) hin zu ermöglichen.

9. Fahrzeugsitz nach Anspruch 8, wobei sich die Abdeckung (32) von der Aufblaseinrichtung (24) um den vorderen Bereich (13) des Rahmens herum erstreckt, um so den Verbindungsbereich (31) des Airbags abzudecken, und mit der Außenseite des Teils (11) des Rahmens verbunden ist, um so die aufgerollte und/oder gefaltete Airbag-Packung (30) abzudecken.

10. Fahrzeugsitz nach Anspruch 9, sofern abhängig von Anspruch 7, wobei sich der oder jeder Befestigungsstift (25) der Aufblaseinrichtung von der Innenseite zu der Außenseite durch das Teil (11) des Rahmens erstreckt und in einer jeweiligen Befestigungsöffnung aufgenommen wird, die in der Abdeckung (32) auf der Außenseite des Rahmens gebildet ist.

11. Fahrzeugsitz nach einem der vorhergehenden Ansprüche, wobei der vordere Bereich (13) des Rückenlehnenrahmens ein gekrümmtes oder anderweitig im Wesentlichen glattes Profil aufweist, um welches herum sich der Verbindungsbereich (31) des Airbags (26) erstreckt.

12. Fahrzeugsitz nach einem der vorhergehenden Ansprüche, wobei der vordere Bereich (13) des Rahmens (6) aus einem Kunststoffmaterial gebildet ist, um welches herum sich der Verbindungsbereich (31) des Airbags (26) erstreckt.

13. Fahrzeugsitz nach einem der vorhergehenden Ansprüche, wobei der Airbag (26) eine Mehrzahl von aufblasbaren Kammern (35, 36) umfasst, die in einer Fluidverbindung angeordnet sind.

14. Fahrzeugsitz nach Anspruch 13, wobei der Airbag (26) eine interne Blende (34) beinhaltet, welche den Airbag in eine erste Kammer (35) proximal zu der Aufblaseinrichtung (24) und eine zweite Kammer (36) distal zu der Aufblaseinrichtung (24) teilt, wobei die Blende (34) dafür geeignet ist, eine beschränkte Strömung von Aufblasgas von der ersten Kammer (35) in die zweite Kammer (36) zu gestatten.

15. Fahrzeugsitz nach einem der vorhergehenden Ansprüche, wobei der Airbag (26) ein Brust- und/oder ein Becken-Bag ist, welcher dafür ausgelegt ist, jeweils einen Seitenschutz für die Brust und/oder das Becken eines auf dem Sitz (1) befindlichen Insassen (17) bereitzustellen.

## Revendications

1. Siège de véhicule (1) comprenant : une assise (2) et un dossier (5), le dossier présentant un cadre (6) enveloppé d'un rembourrage (7) ; et une unité de coussin gonflable (23) comprenant un coussin gonflable (26) présentant un orifice d'entrée (27) relié à un gonfleur (24) destiné à gonfler le coussin gonflable ; l'unité de coussin gonflable (23) étant montée sur le cadre (6) du dossier, le gonfleur (24) étant disposé pour diriger le gaz de gonflage dans le coussin gonflable (26) dans une direction globalement avant (33) par rapport au dossier (5), le siège étant **caractérisé en ce que** le gonfleur (24) est monté sur le cadre (6) en un emplacement intérieur par rapport à une partie (11) du cadre ; le coussin gonflable (26) est enroulé et/ou plié en un paquet de coussin gonflable (30) disposé sur un côté opposé, extérieur, de ladite partie (11) du cadre et globalement contigu à une face latérale extérieure (12) de ladite partie (11) ; et le paquet de coussin gonflable (30) est en liaison fluidique avec l'orifice d'entrée (27) du coussin gonflable par l'intermédiaire d'une zone de liaison (31) du coussin gonflable qui s'étend autour d'une zone avant (13) de ladite partie (11) du cadre ; le coussin gonflable (26) étant ainsi agencé pour se gonfler lors de l'actionnement du gonfleur (24) sous l'effet d'un déplacement vers l'intérieur et vers l'avant de la part du coussin gonflable (24) par rapport au cadre (6) du dossier pour prendre une position déployée dans laquelle le coussin gonflable (26) s'étend globalement vers l'avant par rapport au gonfleur (24).

2. Siège de véhicule selon la revendication 1, dans lequel le coussin gonflable (26) est agencé pour se gonfler par un mouvement vers l'intérieur de la part de ladite zone de liaison (30), en s'éloignant de ladite zone avant (13) du cadre (6) du dossier.

3. Siège de véhicule selon la revendication 1 ou 2, dans lequel le coussin gonflable (26) n'est pas relié au côté extérieur de ladite partie (11) du cadre.

4. Siège de véhicule selon l'une quelconque des revendications précédentes, dans lequel le coussin gonflable (26) est relié au côté intérieur de ladite partie (11) du cadre.

5. Siège de véhicule selon la revendication 4, dans lequel le coussin gonflable (26) est relié au cadre (6) uniquement dans la zone de son orifice d'entrée (27).

6. Siège de véhicule selon la revendication 4 ou 5, dans lequel le coussin gonflable (26) est relié au cadre (26) dans la zone dudit gonfleur (24).

7. Siège de véhicule selon la revendication 6, dans lequel ledit gonfleur (24) comprend au moins une tige de fixation (25) introduite par une ouverture de fixation (29) correspondante formée dans le coussin gonflable (26) dans la zone dudit orifice d'entrée (27) et reliée à ladite partie (11) du cadre.

8. Siège de véhicule selon l'une quelconque des revendications précédentes, dans lequel le coussin gonflable (26) est prévu à l'intérieur ou derrière une enveloppe (32) souple, l'enveloppe étant agencée pour se rompre ou s'ouvrir d'une autre façon afin de permettre le déploiement du coussin gonflable (26) lors de l'actionnement du gonfleur (24).

9. Siège de véhicule selon la revendication 8, dans lequel l'enveloppe (32) s'étend depuis le gonfleur (24), enserre la zone avant (13) du cadre de manière à recouvrir la zone de liaison (31) du coussin gonflable, et est reliée au côté extérieur de ladite partie (11) du cadre de manière à recouvrir le paquet de coussin gonflable (30) enroulé et/ou plié.

10. Siège de véhicule selon la revendication 9 dans la mesure où elle dépend de la revendication 7, dans lequel ladite au moins une tige de fixation (25) du gonfleur traverse ladite partie (11) du cadre, du côté intérieur au côté extérieur, avant d'entrer dans une ouverture de fixation correspondante formée dans l'enveloppe (32), sur le côté extérieur du cadre.

11. Siège de véhicule selon l'une quelconque des revendications précédentes, dans lequel ladite zone avant (13) du cadre du dossier présente un profil arqué ou tout autre profil généralement lisse autour duquel s'étend ladite zone de liaison (31) du coussin gonflable (26).

12. Siège de véhicule selon l'une quelconque des revendications précédentes, dans lequel ladite zone avant (13) du cadre (6) se compose d'une matière plastique autour de laquelle s'étend ladite zone de liaison (31) du coussin gonflable (26).

13. Siège de véhicule selon l'une quelconque des revendications précédentes, dans lequel ledit coussin gonflable (26) comprend une pluralité de chambres gonflables (35, 36) agencées en communication fluidique.

14. Siège de véhicule selon la revendication 13, dans lequel ledit coussin gonflable (26) comporte une cloison interne (34) divisant le coussin gonflable en une première chambre (35) proche du gonfleur (24) et une seconde chambre (36) éloignée du gonfleur (24), la cloison (34) étant configurée pour permettre un écoulement restreint de gaz de gonflage depuis la première chambre (35) en direction de la seconde chambre (36).

15. Siège de véhicule selon l'une quelconque des revendications précédentes, dans lequel le coussin gonflable (26) est un coussin gonflable thoracique et/ou pelvien, respectivement conçu pour fournir une protection latérale du thorax et/ou du pelvis à un occupant (17) du siège (1).
